# EUROPÄISCHE PATENTSCHRIFT

(11) **EP 1 926 959 B1**
(45) Veröffentlichungstag und Bekanntmachung des Hinweises auf die Patenterteilung: **24.12.2014**
(21) Anmeldenummer: 06791671.8
(22) Anmeldetag: 25.08.2006
(51) Int. Cl.: F27B 7/20, F27D 17/00, C04B 7/44, C04B 7/43, C04B 7/60

(54) **ANLAGE UND VERFAHREN ZUR HERSTELLUNG VON ZEMENTKLINKER AUS ZEMENTROHMATERIAL**
SYSTEM AND METHOD FOR THE PRODUCTION OF CLINKER FROM RAW CEMENT MATERIAL
INSTALLATION ET PROCEDE DE PRODUCTION DE CLINKER A PARTIR D'UNE MATIERE PREMIERE A CIMENT

(30) Priorität: 20.09.2005 DE 102005044840
(43) Veröffentlichungstag der Anmeldung: 04.06.2008
(73) Patentinhaber: ThyssenKrupp Industrial Solutions AG, 45143 Essen (DE)
(72) Erfinder: MOHR, Markus, 48249 Dülmen (DE); BEYER, Christoph, 48157 Münster (DE)
(74) Vertreter: Tetzner, Michael
(86) Internationale Anmeldenummer: PCT/EP2006/008362
(87) Internationale Veröffentlichungsnummer: WO 2007/033749

(56) Entgegenhaltungen:
- EP-A1- 1 334 954
- WO-A1-97/30003
- DD-A1- 258 798
- JP-A- 2000 264 687

## Beschreibung

Die Erfindung betrifft eine Anlage sowie ein Verfahren zur Herstellung von Zementklinker aus Zementrohmaterial, wobei das Zementrohmaterial in einem Vorwärmer vorgewärmt, in einer Calciniereinrichtung vorcalciniert und in einem Sinterofen fertiggebrannt und schließlich in einem Kühler abgekühlt wird.

Die bei der Zementherstellung in bestimmten Behandlungszonen anfallenden Stäube werden meistens teilweise wieder in den Zementherstellungsprozess zurückgeführt. Es gibt jedoch auch Stäube bzw. Staubarten, die aus verschiedenen Gründen nicht mehr für den Zementherstellungsprozess ausgenutzt werden. Ein besonders typischer Fall ergibt sich dadurch, dass Rohmaterialien und Brennstoffe für die Zementherstellung meistens Bestandteile von Chloriden, Alkalien sowie Schwefelverbindungen aufweisen, die bei den relativ hohen Behandlungstemperaturen leicht flüchtig werden. Hierdurch entstehen die sogenannten Schadstoffkreisläufe, die den Betrieb der Anlage erheblich stören können.

Es ist bekannt, mit Hilfe eines sogenannten Bypasses einen Teil der Abgase des Sinterofens abzuziehen und in einer Kühlzone abzuschrecken, wobei sich die Schadstoffe an den Staubpartikeln anlagern. Anschließend wird der Staub mit den Schadstoffen abgeschieden.

Aus der DE-A-196 27 660 ist ein Verfahren bekannt, durch das weitgehend alle im Zementherstellungsprozess anfallenden, abgeschiedenen Stäube, insbesondere auch die bisher meist ausgeschleusten Staubanteile von Bypassführungen und/oder anderweitig verworfenen Stäube ebenfalls für die Zementherstellung genutzt werden können.

Es wird dort vorgeschlagen, dass die aus abgezogenen, heißen Behandlungsgasen abgeschiedenen Stäube in einem gesonderten Staubbrennreaktor wärmebehandelt werden und danach das gebrannte Staubmaterial mit dem im Sinterofen gebrannten Zementklinker in der Kühlzone gemeinsam abgekühlt wird. Bei dem bekannten Verfahren wird als Verbrennungsluft Abluft des Kühlers verwendet, die im Gegenstrom zu den wärmezubehandelnden Stäuben zugeführt wird. Auf diese Weise werden die Stäube einer optimalen Wärmebehandlung unterzogen.

Die an den Stäuben haftenden Schadstoffe werden durch die Wärmebehandlung wieder freigesetzt und gelangen mit dem Abgas nachfolgend in eine separate Kühlzone sowie eine Abscheidezone.

Bei diesem bekannten Verfahren besteht jedoch die Problematik, dass es aufgrund der mit Schadstoffen beladenen Abgase des Staubreaktors zu unerwünschten Anbackungen kommt, bevor die Abgase die Abschreckzone erreichen. Die zweite Problematik besteht darin, dass der Bypassstaub in seiner Zusammensetzung "schwer" brennbar ist und der Drehrohrofen einer doppelten Beanspruchung ausgesetzt ist, nämlich einer Wärmebehandlung des Staubes mit Austreibung von Chlor und dem Brennen des Materials zu Zementklinker. Dies bedeutet, dass das dem Kühler zugeführte Produkt perfekte Klinkerqualität haben muss.

Aus der JP-A-2000 264687 ist eine weitere Anlage zur Herstellung von Zementklinker bekannt, welche einen Staubbrennreaktor zur Wärmebehandlung von abgeschiedenen Stäuben Vorsieht, der Mittel zum Zuführten des Staubes und Mittel zum Zuführen von Verbrennungsluft aufweist, wobei die zu behandelnden Stäube und die Verbrennungsluft den Staubbrennreaktor im Gleichstrom durchlaufen. Auch bei dieser bekannten Anlage wird als Verbrennungsluft die Abluft des Kühlers verwendet.

Aus der EP 1 334 954 ist ferner ein Drehtrommelreaktor zur Verbrennung von Sekundärbrennstoffen bekannt, wobei der Sekundärbrennstoff und Tertiärluft im Gleichstrom zugeführt werden. Weiterhin besteht die Möglichkeit Zementrohmehl zuzuführen.

Der Erfindung liegt nun die Aufgabe zugrunde eine Anlage sowie ein Verfahren zur Herstellung von Zementklinker aus Zementrohmaterial anzugeben, bei dem die Problematik der Anbackungen durch die Abgase des Staubbrennreaktors weitgehend vermieden werden können und es zusätzlich zu einer Ofenentlastung kommt, wobei die Wärmebehandlung der Stäube im Staubbrennreaktor in einem hohen Temperaturbereich von vorzugsweise 1100°C bis 1600°C erfolgt.

Erfindungsgemäß wird diese Aufgabe durch die Merkmale der Ansprüche 1 und 8 gelöst.

Die erfindungsgemäße Anlage zur Herstellung von Zementklinker aus Zementrohmehl besteht im Wesentlichen aus einem Vorwärmer zum Vorwärmen des Zementrohmaterials, einer Calciniereinrichtung zum Vorcalcinieren des vorgewärmten Zementrohmaterials, einem Sinterofen zum Fertigbrennen des vorcalcinierten Zementrohmaterials zu Zementklinker, wobei die Calciniereinrichtung mit dem Sinterofen über eine Mehlschurre verbunden ist, und einem Kühler zum Abkühlen des heißen Zementklinkers. Zwischen dem Kühler und der Calciniereinrichtung ist eine Tertiärluftleitung vorgesehen, über welche der Calciniereinrichtung Tertiärluft zugeführt wird. Weiterhin ist ein Staubbrennreaktor zur Wärmebehandlung von abgeschiedenen Stäuben vorgesehen, der Mittel zum Zuführen des Staubes, Mittel zum Zuführen von Verbrennungsluft und Mittel zum Zuführen von Brennstoff aufweist.

Der Kühler steht mit den Mitteln zum Zufiihren von Verbrennungsluft derart in Verbindung, das zumindest ein Teil der Tertiärluft als Verbrennungsluft den Staubbrennreaktors zugeführt wird und die Mittel zum Zuführen des Staubes und die Mittel zum Zuführen von Verbrennungsluft derart angeordnet sind, dass die zu behandelnden Stäube und die Verbrennungsluft den Staubbrennreaktor im Gleichstrom durchlaufen. Der Staubreaktor weist ferner einen Auslass aufweist, der mit der Mehlschurre in Verbindung steht, so dass der im Staubreaktor wärmebehandelte Staub zusammen mit dem vorcalcinierten Zementrohmaterial über die Mehlschurre in den Sinterofen gelangt.

Beim erfindungsgemäßen Verfahren zur Herstellung von Zementklinker aus Zementrohmaterial wird das Zementrohmaterial in einem Vorwärmer vorgewärmt, in einer Calciniereinrichtung vorcalciniert, gelangt über eine Mehlschurre in einen Sinterofen und wird dort fertiggebrannt und schließlich in einem Kühler abgekühlt. Dabei wird Tertiärluft des Kühlers der Calciniereinrichtung zugeführt und abgeschiedene Stäube werden mit Hilfe von Verbrennungsluft und Brennstoff in einem Staubbrennreaktor wärmebehandelt. Zumindest ein Teil der Tertiärluft wird als Verbrennungsluft dem Staubreaktor zugeführt und die zu behandelnden Stäube und die Verbrennungsluft werden derart zugeführt., dass sie den Staubbrennreaktor im Gleichstrom durchlaufen. Weiterhin gelangt der im Staubreaktor wärmebehandelte Staub über einen mit der Mehlschurre in Verbindung stehenden Auslass des Staubreaktors zusammen mit dem vorcalcinierten Zementrohmaterial über die Mehlschurre in den Sinterofen.

Durch die Maßnahme, dass die zu behandelnden Stäube und die Verbrennungsluft den Staubbrennreaktor im Gleichstrom durchlaufen, wird das Abgas des Staubbrennreaktors nicht mehr durch die im Gegenstrom zugeführten kühleren Stäube abgekühlt. Dadurch verbleiben die Schadstoffe im Abgas und schlagen sich erst in einer nachfolgenden Kühlzone an mitgeführten Staubpartikeln nieder.

Bei der sogenannten "Tertiärluft" handelt es sich um den Teil der Kühlerabluft, der in einem Temperaturbereich von 400°C bis 900°C liegt und der Calciniereinrichtung zugeführt wird. Es handelt sich um relativ heiße Luft, die als Verbrennungsluft in der Calciniereinrichtung eingesetzt wird. Erfindungsgemäß wird ein Teil dieser Tertiärluft abgezweigt und dem Staubbrennreaktor als Verbrennungsluft zugeführt. Durch das relativ hohe Temperaturniveau der Tertiärluft kann die Wärmebehandlung der Stäube im Staubbrennreaktor in einem Temperaturbereich von 1100°C bis 1600°C erfolgen.

Weitere Ausgestaltungen der Erfindung sind Gegenstand der Unteransprüche.

Wird der wärmebehandelte Staub des Staubbrennreaktors über die Mehlschurre dem Sinterofen zugeführt., ist eine klare Trennung zwischen den Abgasen der beiden Öfen gegeben. Auf diese Weise wird eine Rückführung der Stäube ohne Beeinträchtigung der Betriebsweise der Anlage im Bereich der Calciniereinrichtung ermöglicht.

Üblicherweise stammt der wärmezubehandelnde Staub aus einem Bypasssystem, welches einen Teil der Abgase des Sinterofens abzieht und nachfolgend einer Kühlzone und einer Abscheidezone zuführt. Der in der Abscheidezone anfallende Staub wird dann dem Staubbrennreaktor zugeführt. Die im Staubbrennreaktor anfallenden Abgase können wahlweise der Kühl- und Abscheidezone des Bypasssystems oder separaten Kühl- und Abscheidezonen zugeführt werden. Außerdem ist denkbar jeweils eine Kühlzone für die abgezweigten Abgase des Sinterofens und die Abgase des Staubbrennreaktors sowie eine gemeinsame Abscheidezone vorzusehen. Im ersten und dritten Fall müsste von Zeit zu Zeit ein Teil der abgeschiedenen Stäube ausgeschleust werden, damit eine Unterbrechung der Schadstoffkreisläufe stattfindet. Bei der zweiten Variante würde der in der separaten Abscheidezone abgeschiedene Staub des Abgases ausgeschleust und entsorgt werden.

Weitere Vorteile und Ausgestaltungen der Erfindung werden im Folgenden anhand der Beschreibung und der Zeichnung näher erläutert.

In der Zeichnung zeigen
- Fig. 1: eine schematische Darstellung einer erfindungsgemäßen Anlage gemäß einem ersten Ausführungsbeispiel und
- Fig. 2: eine schematische Darstellung einer erfindungsgemäßen Anlage gemäß einem zweiten Ausführungsbeispiel.

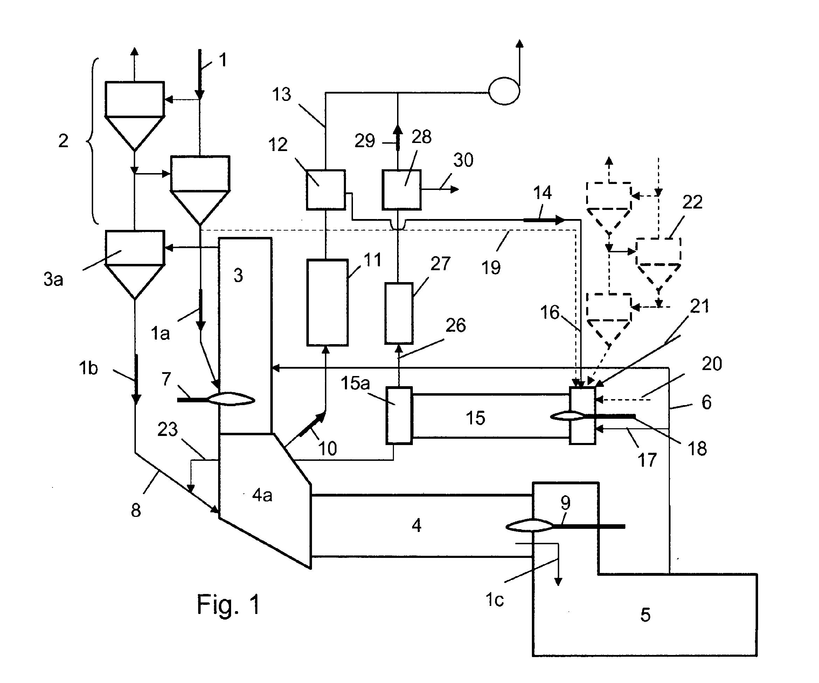

Die im Fig. 1 dargestellte Anlage zur Herstellung von Zementklinker aus Zementrohmaterial 1 besteht im Wesentlichen aus einem Vorwärmer 2 zum Vorwärmen des Zementrohmaterials, einer Calciniereinrichtung 3 zum Vorcalcinieren des vorgewärmten Zementrohmaterials 1a, einem Sinterofen 4 zum Fertigbrennen des vorcalcinierten Zementrohmaterials 1b zu Zementklinker und einem Kühler 5 zum Abkühlen des heißen Zementklinkers 1c.

Zwischen dem Kühler 5 und der Calciniereinrichtung 3 ist eine Tertiärluftleitung 6 vorgesehen, über welche der Calciniereinrichtung Tertiärluft zugeführt wird.

Das Zementrohmaterial 1 wird im oberen Bereich des Vorwärmers 2 aufgegeben und durchläuft den Vorwärmer im Gegenstrom zu den durch den Vorwärmer strömenden Abgasen des Sinterofens 4.

Das vorgewärmte Zementrohmaterial 1a wird dann der Calciniereinrichtung 3 zugeführt, um dort unter Zugabe von Brennstoff über den Brenner 7 und Tertiärluft über die Leitung 6 vorcalciniert zu werden. Auch die Calciniereinrichtung 3 wird zweckmäßigerweise von den Abgasen des Sinterofens 4 durchströmt.

In einem Zyklon 3a wird das vorcalcinierte Zementrohmaterial 1b von den Abgasen getrennt und gelangt über eine Mehlschurre 8 und einen Ofeneinlauf 4a in den Sinterofen 4. Der Sinterofen 4 ist zweckmäßigerweise als Drehrohrofen ausgebildet der über einen an seinem Ausgang angeordneten Brenner 9 befeuert wird.

Der im Sinterofen gebrannte heiße Zementklinker 1c gelangt schließlich in den Kühler 5 und wird dort abgekühlt. Die beim Kühlen entstehende heiße Kühlluft wird als Tertiärluft über die Leitung 6 der Calciniereinrichtung 3 zugeführt.

Die im Zementrohmaterial enthaltenen Schadstoffe, wie Chloride, Alkalien und Schwefelverbindungen werden bei den im Sinterofen vorherrschenden Bedingungen freigesetzt und mit dem Abgas in den Calcinator 3 geführt. Dort kühlt sich das Abgas ab, so dass sich die Schadstoffe am Zementrohmaterial kondensieren. Um diesen Schadstoffkreislauf zu unterbrechen, ist es allgemein bekannt, einen Teil der Abgase des Sinterofens über einen sogenannten Bypass abzuzweigen.

Auch bei dem dargestellten Ausführungsbeispiel wird ein Teil 10 der Abgase des Sinterofens 4 im Bereich des Ofeneinlaufs 4a abgezweigt und nachfolgend einer Kühlzone 11 und einer Abscheidezone 12 zugeführt. In der Kühlzone 11 wird das Abgas "abgeschreckt", so dass es zu einer Kondensation der Schadstoffe an den mitgeführten Staubpartikeln kommt. In der Abscheidezone 12 wird dann die Gasphase von den Staubpartikeln mit den angelagerten Schadstoffen getrennt. Die dabei entstehende Gasphase 13 wird beispielsweise über einen Abluftkamin ausgeschleust. Die abgeschiedenen Stäube 14 werden einem Staubbrennreaktor 15 zugeführt.

Der Staubbrennreaktor 15 wird vorzugsweise ebenfalls als Drehrohrofen ausgebildet. Er weist Mittel 16 zum Zuführen der abgeschiedenen Stäube 14, Mittel 17 zum Zuführen von Verbrennungsluft und Mittel 18 zum Zuführen von Brennstoff auf, wobei dem Staubbrennreaktor zumindest teilweise Sekundärbrennstoffe aufgegeben werden können. Über eine Abzweigung in der Tertiärluftleitung 6 steht der Kühler 5 mit den Mitteln 17 zum Zuführen von Verbrennungsluft in Verbindung. Auf diese Weise wird dem Staubbrennreaktor 15 ebenfalls Tertiärluft zugeführt. Die Mittel 16 zum Zuführen der abgeschiedenen Stäube 14 und die Mittel 17 zum Zuführen von Verbrennungsluft sind derart angeordnet, dass die zu behandelnden Stäube 14 und die Verbrennungsluft den Staubbrennreaktor 15 im Gleichstrom durchlaufen.

Neben den abgeschiedenen Stäuben 14 wäre es auch denkbar, einen Teil des vorgewärmten Zementrohmaterial 1a über eine Leitung 19 dem Staubbrennreaktor 15 zuzuführen. Weiterhin kann über Mittel 20 zusätzlich, sauerstoffreiche Verbrennungsluft und über Mittel 21 weiterer Staub in den Staubbrennreaktor eingetragen werden.

Im Rahmen der Erfindung ist es auch denkbar, die im Staubbrennreaktor 15 zu behandelnden Stäube zunächst in einem zusätzlichen Vorwärmer 22 vorzuwärmen. In der Zeichnung ist dieser Vorwärmer 22 gestrichelt eingezeichnet. Wahlweise ist es denkbar, dass der dem Ofensystem entnommene Bypassstaub "online" aufgegeben wird und damit bereits vorgewärmt ist.

Der Staubbrennreaktor 15 weist einen Auslass 15a auf, der über die Leitung 23 mit der Mehlschurre 8 verbunden, so dass der im Staubbrennreaktor wärmebehandelte Staub zusammen mit dem vorcalcinierten Zementrohmaterial 1b über die Mehlschurre in den Sinterofen 4 gelangt.

Das Abgas 26 wird in einer zweiten Kühlzone 27 "abgeschreckt", wodurch es zu einer Kondensation der Schadstoffbestandteile an dem mitgeführten Staubpartikeln kommt. In einer nachgeschalteten zweiten Abscheidezone 28 wird das Abgas in eine Gasphase 29 und Staub 30 getrennt. Die Gasphase 29 kann dann zusammen mit der Gasphase 13 abgeleitet werden. Der mit Schadstoffen belastete Staub 30 wird zweckmäßigerweise verworfen. Es ist aber denkbar, das zumindest ein Teil dieses Staubes 30 nochmals dem Staubbrennreaktors 15 zugeführt wird.

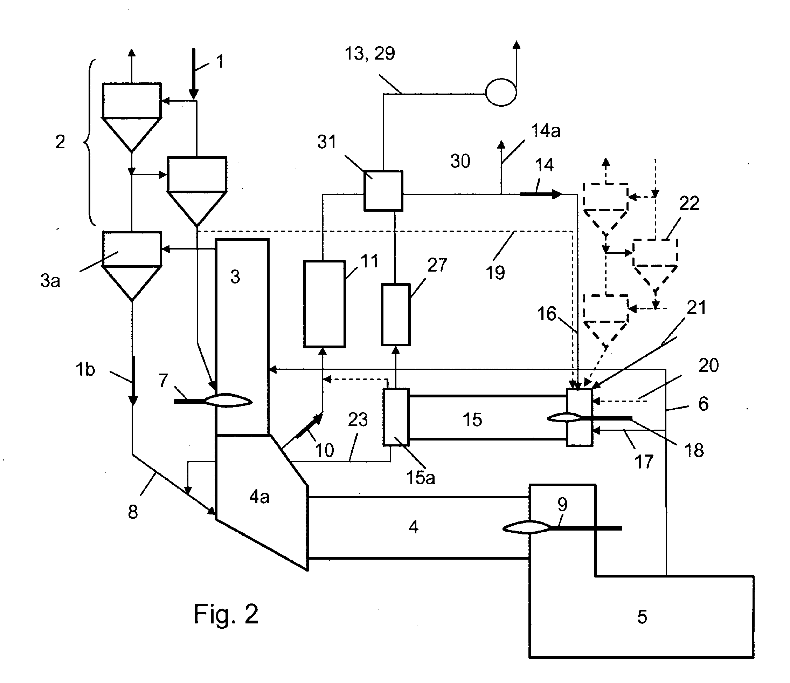

In Fig. 2 ist eine Anlage gemäß einem zweiten Ausführungsbeispiel dargestellt, die sich im Wesentlichen nur durch das Bypasssystem und die Behandlung der Abgase des Staubbrennreaktors 15 unterscheiden.

Im dargestellten Ausführungsbeispiel werden nicht zwei separate Abscheidezonen, sondern ist eine gemeinsame Abscheidezone 31 vorgesehen. Der Teilstrom 10 des Abgases des Sinterofens 4 wird somit in der Kühlzone 11 und der gemeinsam Abscheidezone 31 behandelt. Das Abgas des Staubbrennreaktors kann entweder auch der Kühlzone 11 und nachfolgend der gemeinsamen Abscheidezone 31 oder über eine separate Kühlzone 27 der Abscheidezone 31 zugeführt werden. Der in der gemeinsamen Abscheidezone 31 abgeschiedenen Staub 14 wird wiederum dem Staubbrennreaktor 15 zugeführt, während die Gasphase 13, 29 abgeleitet wird. Um jedoch die Schadstoffkreisläufe zu unterbrechen, muss ein Teil 14a der abgeschiedenen Stäube 14 von Zeit zu Zeit ausgeschleust werden.

Die Wärmebehandlung der Stäube 14 im Staubbrennreaktor 15 erfolgt vorzugsweise in einem Temperaturbereich von 1100°C bis 1600°C, wobei die Verweilzeit der Stäube im Staubbrennreaktor zwischen 5 und 30 Minuten beträgt. Der Staubbrennreaktor 15 wird zweckmäßigerweise über die Temperatur und/oder den Sauerstoffgehalt am Auslass 15a des Staubbrennreaktors gesteuert.

Die oben beschriebenen Anlagen und das Verfahren zeichnen sich dadurch aus, dass die beim Zementherstellungsprozess anfallenden Stäube sehr effizient und wirtschaftlich wieder in den Zementherstellungsprozess zurückgeführt werden können, wobei gleichzeitig auch Schadstoffe, wie Chloride und Alkalien, ausgeschleust werden.

## Patentansprüche

1. Anlage zur Herstellung von Zementklinker aus Zementrohmaterial (1) mit
a. einem Vorwärmer (2) zum Vorwärmen des Zementrohmaterials,
b. einer Calciniereinrichtung (3) zum Vorcalcinieren des vorgewärmten Zementrohmaterials,
c. einem Sinterofen (4) zum Fertigbrennen des vorcalcinierten Zementrohmaterials zu Zementklinker, wobei die Calciniereinrichtung (3) mit dem Sinterofen (4) über eine Mehlschurre (8) verbunden ist und
d. einem Kühler (5) zum Abkühlen des heißen Zementklinkers,
e. wobei zwischen dem Kühler und der Calciniereinrichtung eine Tertiärluftleitung (6) vorgesehen ist, über welche der Calciniereinrichtung Tertiärluft zugeführt wird sowie
f. einem Staubbrennreaktor (15) zur Wärmebehandlung von abgeschiedenen Stäuben (14) mit Mitteln (16) zum Zuführen des Staubes, Mitteln (17) zum Zuführen von Verbrennungsluft und Mitteln (18) zum Zuführen von Brennstoff, wobei die Mittel (16) zum Zuführen des Staubes und die Mittel (17) zum Zuführen von Verbrennungsluft am Staubbrennreaktor (15) im Sinne eines Durchlaufs der zu behandelnden Stäube und der Verbrennungsluft im Gleichstrom angeordnet sind,
**dadurch gekennzeichnet, dass** der Kühler (5) über eine Abzweigung in der Tertiärluftleitung (6) mit den Mitteln (17) zum Zuführen von Verbrennungsluft in Form von Tertiärluft in Verbindung steht und der Staubreaktor (15) einen Auslass (15a) aufweist, der mit der Mehlschurre (8) in Verbindung steht, so dass der im Staubreaktor wärmebehandelte Staub zusammen mit dem vorcalcinierten Zementrohmaterial über die Mehlschurre in den Sinterofen gelangt.

2. Anlage nach Anspruch 1, **dadurch gekennzeichnet, dass** dem Staubbrennreaktor (15) ein zusätzlicher Vorwärmer (22) zum Vorwärmen der zu behandelnden Stäube vorgeschaltet ist.

3. Anlage nach Anspruch 1, **gekennzeichnet durch** einen Bypass zum Abziehen eines Teils des Abgases aus dem Sinterofen (4) mit einer Kühlzone (11) zum Kühlen des Abgases und einer Abscheidezone (12) zum Abscheiden des im Abgas (10) enthaltenen Staubes (14), wobei die Abscheidezone mit dem Staubbrennreaktor zum Zuführen der abgeschiedenen Stäube in Verbindung steht.

4. Anlage nach Anspruch 1, **gekennzeichnet durch** eine Kühlzone (14, 27) zum Kühlen des im Staubbrennreaktor entstehenden Abgases und eine Abscheidezone (12,28, 31) zum Abscheiden des im Abgas enthaltenen Staubes.

5. Verfahren zur Herstellung von Zementklinker aus Zementrohmaterial, wobei das Zementrohmaterial (1) in einem Vorwärmer (2) vorgewärmt, in einer Calciniereinrichtung (3) vorcalciniert, über eine Mehlschurre in einen Sinterofen (4) gelangt und dort fertig gebrannt und schließlich in einem Kühler (5) abgekühlt wird und wobei Tertiärluft des Kühlers der Calciniereinrichtung zugeführt wird und abgeschiedene Stäube mit Hilfe von Verbrennungsluft und Brennstoff in einem Staubbrennreaktor (15) wärmebehandelt werden, wobei die zu behandelnden Stäube und die Verbrennungsluft derart zugeführt werden, dass sie den Staubbrennreaktor im Gleichstrom durchlaufen,
**dadurch gekennzeichnet, dass** zumindest ein Teil der Tertiärluft als Verbrennungsluft dem Staubbrennreaktor (15) zugeführt wird und der im Staubreaktor wärmebehandelte Staub über einen mit der Mehlschurre (8) in Verbindung stehenden Auslass (15a) des Staubreaktors (15) zusammen mit dem vorcalcinierten Zementrohmaterial über die Mehlschurre in den Sinterofen gelangt.

6. Verfahren nach Anspruch 5, **gekennzeichnet durch**, dass die Wärmebehandlung der Stäube (14) im Staubbrennreaktor in einem Temperaturbereich von 1100°C bis 1600°C erfolgt und die Verweilzeit der Stäube im Staubbrennreaktor (15) zwischen 5 und 30 Minuten beträgt.

7. Verfahren nach Anspruch 5, **gekennzeichnet durch**, dass ein Teil (10) des Abgases aus dem Sinterofen (4) in einen Bypass abgezogen, gekühlt und entstaubt wird, wobei der abgeschiedene Staub (14) dem Staubbrennreaktor zugeführt wird und der im Staubbrennreaktor (15) wärmebehandelte Staub dem vorcalcinierten oder dem zu kühlenden Zementrohmaterial zugeführt wird.

## Claims

1. Plant for the production of cement clinker from cement raw material (1), having
a. a preheater (2) for preheating the cement raw material,
b. a calcining apparatus (3) for precalcining the preheated cement raw material,
c. a sintering kiln (4) for completely burning the precalcined cement raw material to cement clinker, wherein the calcining apparatus (3) is connected with the sintering kiln (4) via a meal chute (8) and
d. a cooler (5) for cooling down the hot cement clinker,
e. wherein between the cooler and the calcining apparatus there is provided a tertiary air duct (6), via which tertiary air is supplied to the calcining apparatus, and
f. a dust combustion reactor (15) for heat-treating separated dusts (14), having means (16) for supplying the dust, means (17) for supplying combustion air and means (18) for supplying fuel, the means (16) for supplying the dust and the means (17) for supplying combustion air are arranged so that the dusts to be treated and the combustion air pass through the dust combustion reactor (15) in co-current flow,
**characterised in that** the cooler (5) is connected via a branch in the tertiary air duct (6) to the means (17) for supplying combustion air in form of the tertiary air and **in that** the dust reactor (15) has an outlet (15a) that is connected to the meal chute (8) so that the dust heat-treated in the dust reactor reaches the sintering kiln together with the precalcined cement raw material via the meal chute.

2. Plant according to claim 1, **characterised in that** an additional preheater (22) for preheating the dusts to be treated is located upstream of the dust combustion reactor (15).

3. Plant according to claim 1, **characterised by** a bypass for extracting part of the exhaust gas from the sintering kiln (4), with a cooling zone (11) for cooling the exhaust gas and a separation zone for separating the dust (14) contained in the exhaust gas (10), wherein the separation zone is connected to the dust combustion reactor for supplying the separated dusts.

4. Plant according to claim 1, **characterised by** a cooling zone (14, 27) for cooling the exhaust gas occurring in the dust combustion reactor and a separation zone (12, 28, 31) for separating the dust contained in the exhaust gas.

5. Method for the production of cement clinker from cement raw material, wherein the cement raw material (1) is preheated in a preheater (2), precalcined in a calcining apparatus (3), reaching a sintering kiln (4) via a meal chute and is completely burned there and finally cooled down in a cooler (5), and wherein tertiary air of the cooler is supplied to the calcining apparatus and separated dusts are heat-treated by means of combustion air and fuel in a dust combustion reactor (15), wherein and the dusts to be treated and the combustion air are supplied such that they pass through the dust combustion reactor in co-current flow,
**characterised in that** at least a part of the tertiary air is supplied as combustion air to the dust combustion reactor (15) and **in that** the dust heat-treated in the dust reactor reaches the sintering kiln together with the precalcined cement raw material via the meal chute being connected to an outlet (15a) of the dust reactor (15).

6. Method according to claim 5, **characterised in that** the heat treatment of the dusts (14) in the dust combustion reactor is effected at a temperature in the range from 1100°C to 1600°C and the dwell time of the dusts in the dust combustion reactor (15) is between 5 and 30 minutes.

7. Method according to claim 5, **characterised in that** a part (10) of the exhaust gas is extracted from the sintering kiln (4) into a bypass, cooled and dedusted, wherein the separated dust (14) is supplied to the dust combustion reactor and the dust heat-treated in the dust combustion reactor (15) is supplied to the precalcined cement raw material or to the cement raw material to be cooled.

## Revendications

1. Installation pour la fabrication de clinker de ciment à partir d'une matière première à ciment (1), avec
a. un dispositif de préchauffage (2) pour le préchauffage de la matière première à ciment,
b. un dispositif de calcination (3) pour la précalcination de la matière première à ciment préchauffée,
c. un four de frittage (4) pour finir la cuisson de la matière première à ciment précalcinée en clinker de ciment, sachant que le dispositif de calcination (3) est relié au four de frittage (4) par l'intermédiaire d'une goulotte à farine (8), et
d. un dispositif de refroidissement (5) pour le refroidissement du clinker de ciment brûlant,
e. sachant qu'une conduite d'air tertiaire (6), par l'intermédiaire de laquelle de l'air tertiaire est conduit au dispositif de calcination, est prévue entre le dispositif de refroidissement et le dispositif de calcination,
et
f. un réacteur de combustion de poussière (15), pour le traitement thermique de poussières séparées (14), avec des moyens d'alimentation en poussières (16), des moyens d'alimentation en air de combustion (17) et des moyens d'alimentation en combustible (18), sachant que les moyens d'alimentation en poussières (16) et les moyens d'alimentation en air de combustion (17) du réacteur de combustion de poussière (15) sont agencés en vue d'un passage des poussières à traiter et de l'air de combustion en flux semblable,
**caractérisée en ce que** le dispositif de refroidissement (5) est en communication avec les moyens d'alimentation en air de combustion (17) en forme d'air tertiaire par l'intermédiaire d'une dérivation prévue dans la conduite d'air tertiaire (6), et que le réacteur de combustion de poussière (15) est doté d'une sortie (15a) qui est reliée à la goulotte à farine (8), de telle manière que la poussière, traitée thermiquement dans le réacteur à poussière, parvienne, par l'intermédiaire de la goulotte à farine, au four de frittage, en commun avec la matière première à ciment précalcinée.

2. Installation selon la revendication 1, **caractérisée en ce que**, pour le préchauffage des poussières à traiter, un dispositif de préchauffage supplémentaire (22) est connecté en amont du réacteur de combustion de poussière (15).

3. Installation selon la revendication 1, **caractérisée par** une dérivation pour le prélèvement d'une partie des gaz d'échappement du four de frittage (4), avec une zone de refroidissement (11) pour le refroidissement des gaz d'échappement et une zone de séparation (12) pour la séparation des poussières (14) contenues dans les gaz d'échappement (10), sachant que la zone de séparation est en communication avec le réacteur à poussière pour l'amenée des poussières séparées.

4. Installation selon la revendication 1 **caractérisée par** une zone de refroidissement (14, 27) pour le refroidissement des gaz d'échappement générés dans le réacteur à poussière et une zone de séparation (12, 28, 31) pour la séparation des poussières contenues dans les gaz d'échappement.

5. Procédé de fabrication de clinker de ciment à partir de matière première à ciment, sachant que la matière première à ciment (1) est préchauffée dans un dispositif de préchauffage (2), précalcinée dans un dispositif de calcination (3), conduite, par l'intermédiaire d'une goulotte à farine, dans un four de frittage (4) pour la finition de la cuisson, et est finalement refroidie dans un dispositif de refroidissement (5), et sachant que l'air tertiaire du dispositif de refroidissement est conduit au dispositif de calcination et que les poussières séparées sont traitées thermiquement dans un réacteur de combustion de poussière (15), les poussières à traiter et l'air de combustion étant conduits de manière à ce qu'ils passent à travers le réacteur de combustion de poussière en flux semblable.
**caractérisé en ce qu**'au moins une partie de l'air tertiaire est conduite au réacteur de combustion de poussière (15) en tant qu'air de combustion et que la poussière, traitée thermiquement dans le réacteur à poussière, parvient au four de frittage (4), en commun avec la matière première à ciment précalcinée, par l'intermédiaire d'une sortie (15a) du réacteur de combustion de poussière (15) qui est en communication avec la goulotte à farine (8).

6. Procédé selon la revendication 5, **caractérisé en ce que** le traitement thermique des poussières (14) dans le réacteur de combustion de poussière est effectué à une température située dans une plage de 1100 °C à 1600 °C et que le temps de séjour des poussières dans le réacteur de combustion de poussière (15) est situé entre 5 et 30 minutes.

7. Procédé selon la revendication 5, **caractérisé en ce qu**'une partie des gaz d'échappement (10) en provenance du four de frittage (4) est soutirée dans une dérivation, refroidie et dépoussiérée, sachant que la poussière (14) séparée est conduite au réacteur de combustion de poussière et que la poussière traitées thermiquement dans le réacteur de combustion de poussière (15) est conduite à la matière première à ciment précalcinée ou refroidie.
